# EUROPEAN PATENT SPECIFICATION

(11) **EP 2 455 739 B1**
(45) Date of publication and mention of the grant of the patent: **29.11.2017**
(21) Application number: 11190005.6
(22) Date of filing: 21.11.2011
(51) Int. Cl.: G01M 5/00

(54) **Machine for the analysis of the resistance of soil, or of an anchorage structure, to the deflection of a post for a motorway guardrail.**
Analysemachine für den Bodenwiderstand, oder einer Ankerstruktur, bezüglich der Auslenkung einer Leitplanke.
Machine pour l'analyse de la résistance du sol, ou d'une structure d'anchorage, à la déflection d'un montant d'une barrière de sécurité d'autoroute.

(30) Priority: 23.11.2010 IT MI20102170
(43) Date of publication of application: 23.05.2012
(73) Proprietor: Societa' Iniziative Nazionali Autostradali - S.I.N.A. S.p.A., 20135 Milano (IT)
(72) Inventor: Giavotto, Vittorio, 20133 MILANO (IT)
(74) Representative: Petruzziello, Aldo

(56) References cited:
- EP-A1- 0 638 794
- EP-A2- 1 416 259
- WO-A1-2009/127851
- US-A1- 2008 223 134

## Description

The present invention relates, in general, to the field of motorway guardrails. More particularly, the object of the invention is a machine for the analysis of the resistance of the soil, or of an anchorage structure, to the deflexion of a post for motorway guardrail.

Roads and motorways often have hazardous points for vehicle traffic. The guardrails installed at the sides of the road (or of the motorway) constitute a valid means for restraining and redirecting vehicles safely.

To this end, in the case of impact between guardrail and vehicle, the guardrail has to deform so as to mitigate the intensity of the impact, presenting to the vehicle a surface which is maintained regular and without unevenness during the deformation, dissipating the impact energy and returning the least amount possible thereof to the vehicle.

Road or motorway guardrails are constituted, typically, of one or more longitudinal members, or bands, supported by a plurality of posts, or piers. The posts are planted in the soil or restrained to the edge of a structure or construction, such as for example a bridge, a support wall or the like.

In the case of impact the bands behave like beams on many supports, the supports being made up of the posts. The latter are, therefore, the components of the guardrail which absorb and dissipate the impact energy, while the bands have the function of distributing the load on the posts, in addition naturally to that of providing the rest surface for the impacting vehicle.

As a result the performances of a road guardrail depend a great deal on the behaviour of the posts, which depends, in turn, on the consistency of the soil wherein the posts are planted or on the resistance of the structure whereto the posts are restrained.

In its function of support of a guardrail subject to the impact of a vehicle, each post works mainly by deflexion, in general well beyond the elastic limits.

With particular reference to the case of posts stuck in the soil, to date the tests of resistance of the soil to the deflexion of a post for motorway guardrail are performed in a laboratory using samples of soil taken from the site wherein the guardrail is to be installed.

These samples of soil, often of considerable size, must, therefore, be transported from the site of installation to the laboratory, with consequent increase in costs. Moreover the tests performed on them supply results which are often inaccurate.

The real effect of the different types of soil or of structure on the behaviour of a support post of a motorway guardrail has until now been little explored and is very little known.

EP 1416259 A2 relates to a device for quasi-static tests which can be performed in a continuous or discontinuous manner.

US 2008/223134 A1 relates to a device and a method for the application of cyclic loads, such as seismic loads.

The object of the present invention is, therefore, that of solving the problems mentioned above by making available a machine for the analysis, in situ, of the resistance of the soil, or of a restraining structure, to the deflexion, quasi-static and dynamic, of a post for motorway guardrail.

Another object of the present invention is that of providing an analysis machine which is easy to use and which can be obtained at competitive production costs.

These and other objects, which will be made clearer herein below, are achieved in accordance with the invention with the features listed in the annexed independent claim 1.

Further advantageous features of the invention form the object of the dependent claims.

According to the present invention a machine is therefore supplied for the analysis, in situ, of the resistance of the soil, or of an anchorage structure, to the deflexion of a post of a motorway guardrail, characterised in that it comprises a support frame and an analysis device mounted on the support frame. The analysis device comprises:
- a pair of guides;
- a slide provided with means for detecting the resisting force opposed by the post and sliding along the guides between a rest or backward position and a work or advanced position;
- first means for driving the slide, suitable for slowly driving the slide between the backward position and the advanced position, in order to perform a quasi-static resistance analysis; and
- second means for driving the slide, suitable for rapidly driving the slide from the backward position to the advanced position, in order to perform a dynamic resistance analysis.

The features of the invention will be made clearer by the following detailed description referred to its embodiments purely by way of a non-limiting example, illustrated in the accompanying drawings, in which:
Figure 1 is a perspective view from the front of the analysis machine according to the invention;
Figure 2 is a perspective view from behind of the machine of Figure 1;
Figure 3 is a perspective view from above of the analysis device mounted on the support frame of the machine, in rest or backward position;
Figure 4 is a perspective view from below of the analysis device of the machine of Figure 1, in rest or backward position;
Figure 4a is an enlarged view of the detail circled in Figure 4;
Figure 5 is a perspective view from above of the analysis device of the machine of Figure 1, with parts removed to highlight some components thereof;
Figure 6 is a view similar to that of Figure 4, which illustrates the analysis device mounted on the support frame of the machine, in work or advanced position; and
Figures 7 to 9 are views similar to those of Figure 3, which illustrate the functioning of the analysis device of the machine of Figure 1.

In the drawings listed above identical or similar elements are denoted by the same reference numerals.

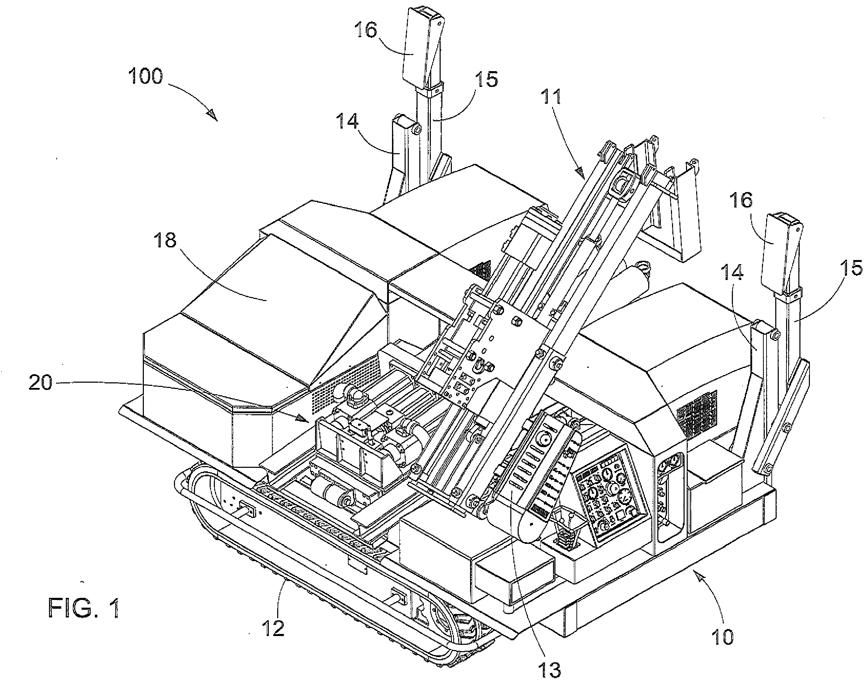

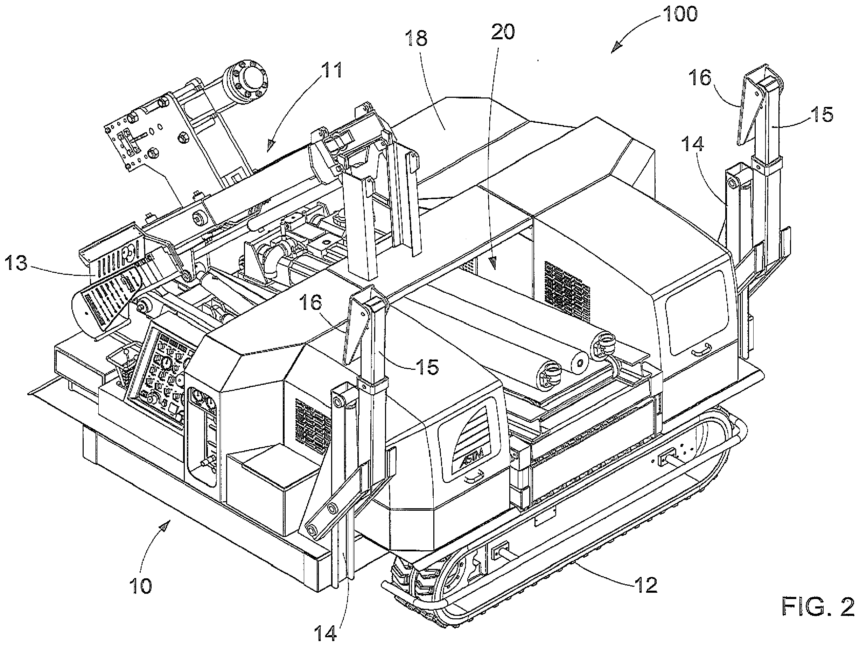

Referring to Figures 1 and 2, they illustrate a machine for the analysis, in situ, of the resistance of the soil, or of an anchorage structure, to the deflexion of a post of a motorway guardrail denoted, in general, by reference numeral 100.

The machine 100 comprises a support frame 10, which rests on wheels or belts 12, which allow the machine 100, driven by a motor (not shown) to reach, for example, soils having different morphology and consistency and to perform on them the resistance analysis.

A pile driver device 11, provided with relative control panel 13, is preferably mounted on the support frame 10, operating which it is possible to plant, in the soil, a post to be subjected to deflexion tests and, then, to extract it from the soil once the tests have been completed.

The pile driver device 11 is of the type known to the state of the art and for this reason will not be described further herein below in the present description.

Two uprights 14 preferably rise up at the rear from the support frame 10, each of which carries an articulated arm 15 provided with end support foot 16.

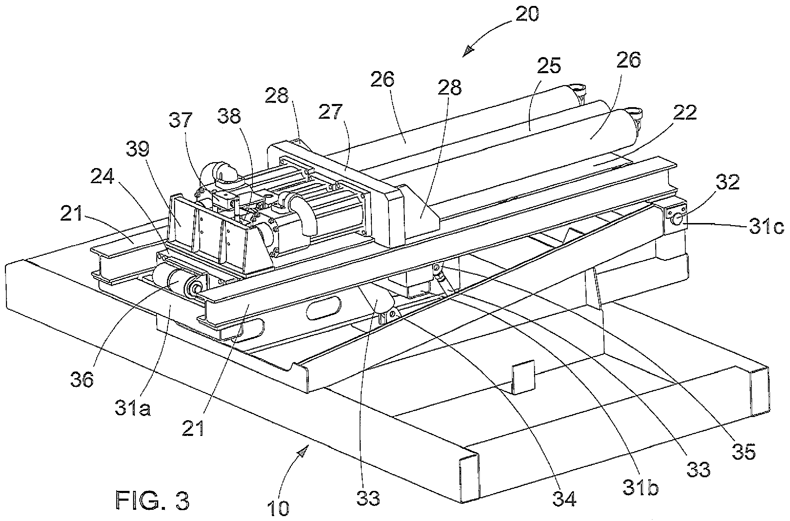

More particularly, each articulated arm 15 can be driven between a rest position, wherein it is raised from the soil, substantially parallel to the respective upright 14, and a work position (not shown), wherein the respective foot 16 rests on the soil, ensuring in this way the stability of the machine 100 during the analysis.
An analysis device 20 is mounted on the support frame 10, with the relative supply means, which will be described in detail herein below with reference to Figures 3 to 6.

More particularly the supply means comprise hydraulic pumps, a pneumatic compressor and an electric generator, all mounted on the frame 10 and covered by a casing 18.

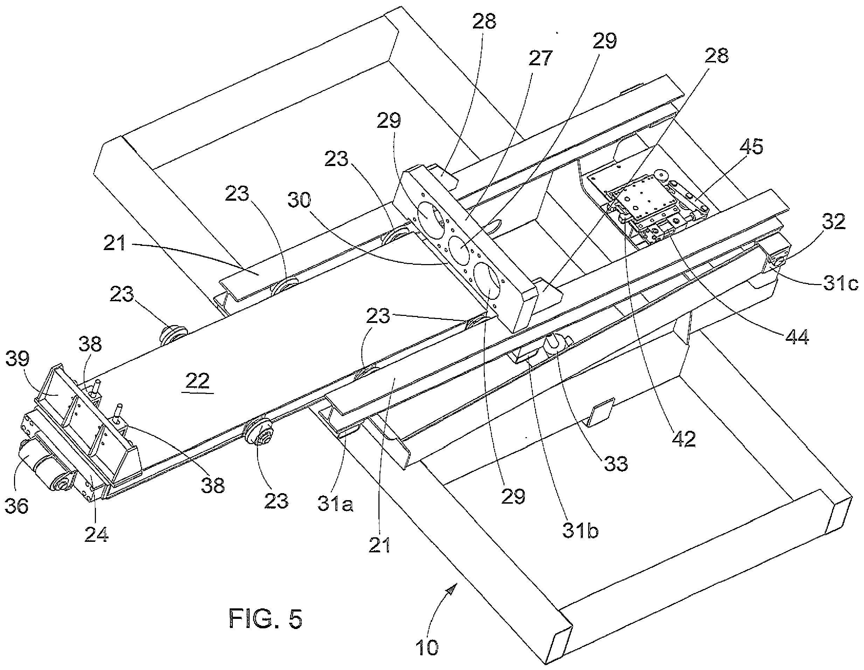

Referring to Figure 3, the analysis device 20 comprises a pair of guides 21, a slide 22 sliding along the guides 21 by means of wheels 23, which can be seen in Figure 5, means 24, carried by the slide 22, for detecting the resisting force opposed by a post previously planted in the soil or restrained to the edge of a structure, such as, for example, a support wall and the like, and first and second means of driving the slide 22, respectively 25 and 26.

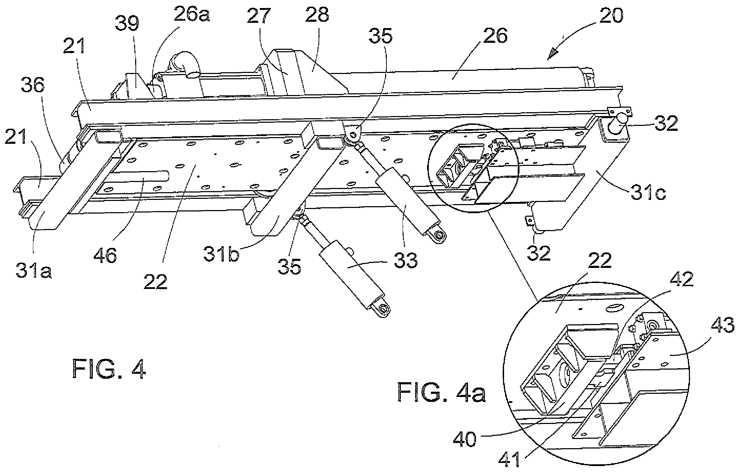

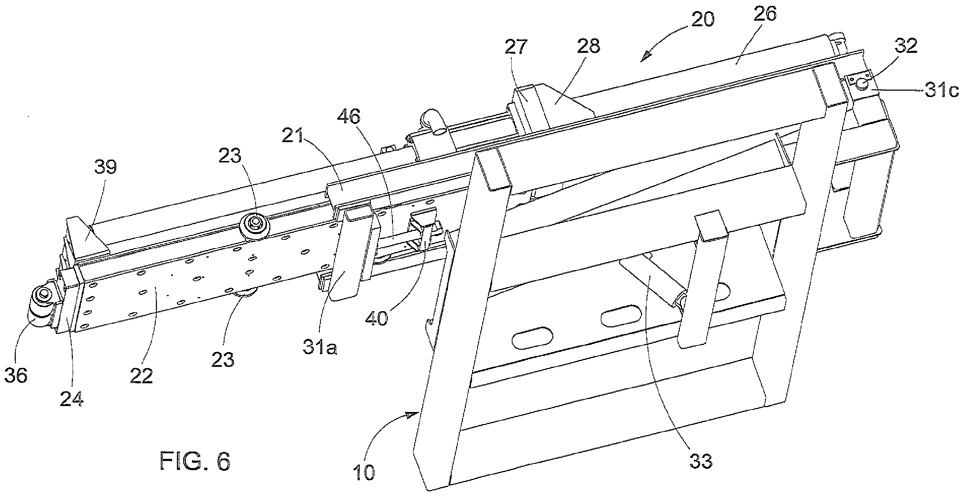

More particularly the slide 22 slides along the guides 21 between a rest or backward position, shown in Figures 3 and 4, and a work or advanced position, shown in Figures 5 and 6.

The guides 21 are connected above by a plate-shaped member 27 provided with end reinforcement brackets 28, wherein a plurality of aligned through holes 29 are formed, which can be seen in Figure 5, for the passage and subsequent blocking in position of the means 25, 26 for driving the slide 22.

As shown in detail in Figure 5, the plate-shaped member 27 has, moreover, at its surface turned towards the slide 22, a groove 30 having length substantially equal to the distance between the guides 21, suitable for allowing the passage of the slide 22 during its movement from the rest position to the work position, and vice versa.

Referring to Figure 4, the guides 21 are, moreover, connected below by at least one crosspiece, preferably a frontal crosspiece 31a, a central crosspiece 31b and a rear crosspiece 31c.

More particularly, pins 32 project laterally from the rear crosspiece 31c, suitable for restraining, rotatably in relation to the support frame 10, the guides 21 and, with them, the slide 22 and the relative driving means 25, 26.

The rotation of the guides 21, and therefore of the entire analysis device 20, takes place by the action of a pair of hydraulic cylinders 33, each one having an end hinged to the frame 10 by means of first fork means 34 (Figure 3) and the other end hinged to a respective guide of the pair of guides 21, by means of second fork means 35, projecting below from the guides 21, preferably in proximity of the central crosspiece 31b.

This allows, advantageously, orientation of the analysis device 20 in such a way that it experts, in use, on the post a thrust in a lower position and in a direction closer to the perpendicular to the axis of the post, when the post has undergone a significant deflexion.

Referring, once again, to Figure 3, the means of detection of the resisting force opposed by the post are made up, for example, of a load cell 24, suitable for detecting the components of the force, parallel and perpendicular to the guides 21. The load cell 24 is, preferably, fixed at the head of the slide 22.

A roll striker 36 is preferably applied to the load cell 24, whose function will be made clearer herein below in the present description.

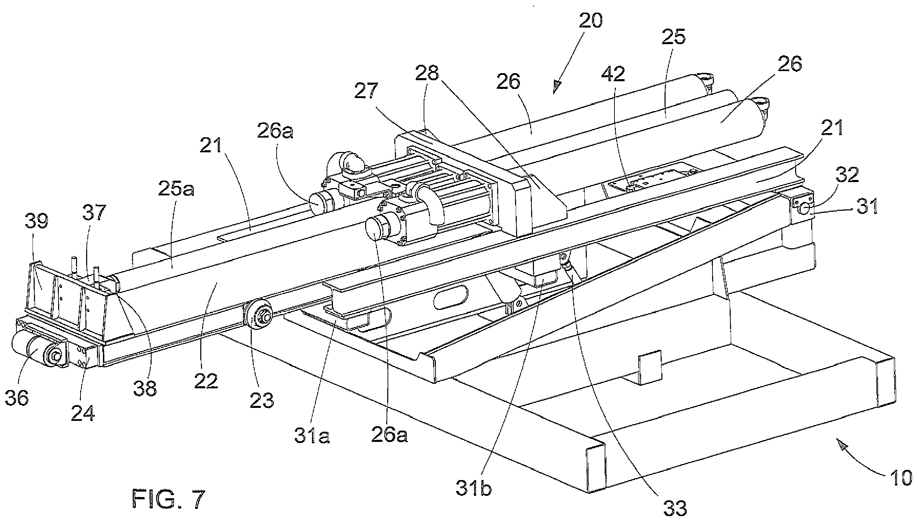

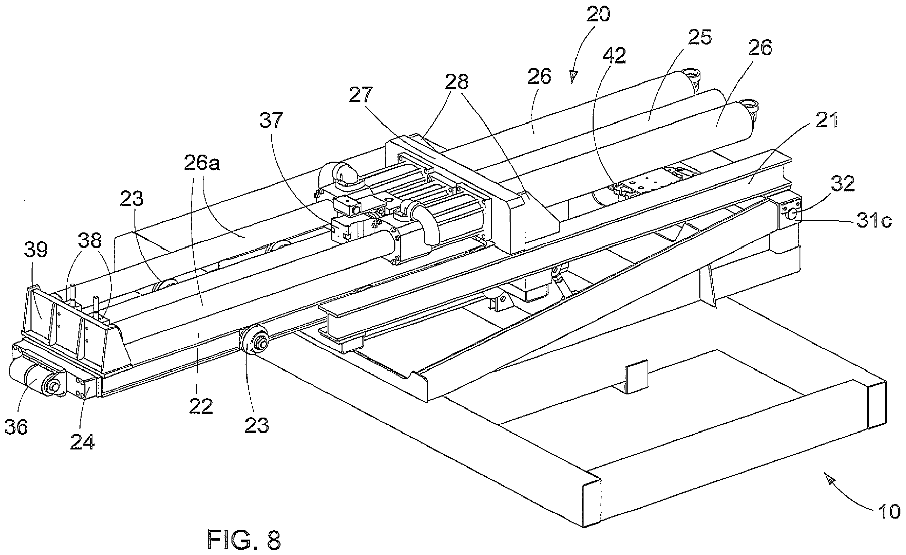

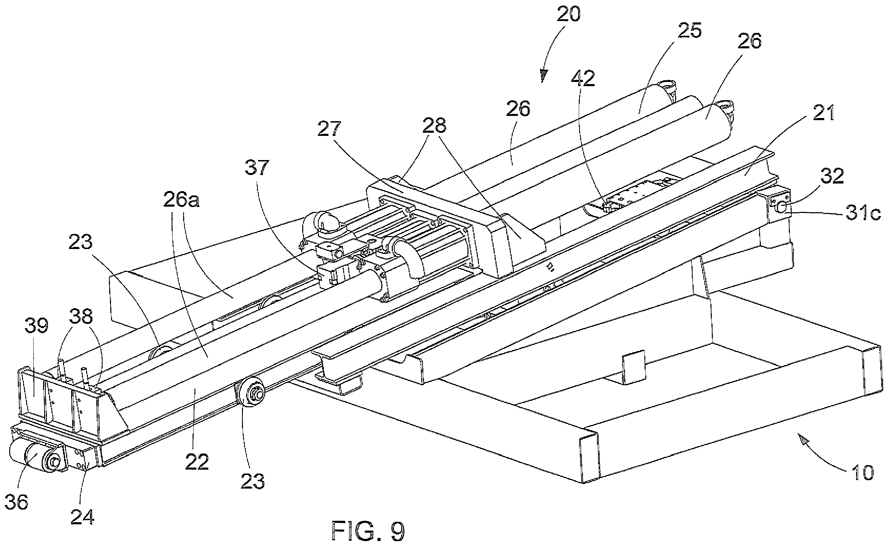

The first means of driving of the slide 22 comprise, preferably, a hydraulic cylinder 25 provided with a stem 25a (Figure 7) supplied by the hydraulic pump (not shown), while the second driving means comprise, preferably, a pair of pneumatic cylinders 26, each one provided with a respective stem 26a (Figures 8 and 9) supplied by the pneumatic compressor (not shown).

Specifically, the supply of the hydraulic cylinder 25 causes a slow forward/backward movement of the slide 22, for the performance of an analysis of resistance of the soil, or of the structure, to a so-called quasi-static deflexion of the post, herein below, in brief, quasi-static analysis, wherein the slide 22 abuts gradually on the post. The operation of the pneumatic cylinders 26 causes a rapid forward movement of the slide 22, for the performance of an analysis of the resistance of the soil or of the structure to a dynamic deflexion of the post, herein below, in brief, dynamic analysis, wherein the slide 22 impacts sharply against the post.

More particularly, the cylinders 25, 26 are arranged above the slide 22, parallel thereto, and, as mentioned previously, are blocked in position on the plate-shaped member 27, after passage through the respective through holes 29 formed therein.

As shown in greater detail in Figure 7, the stem 25a of the hydraulic cylinder 25 can, moreover, be coupled releasably to the slide 22 by means of a hook 37, provided at the head of the stem 25a, suitable for coupling with corresponding fitting means 38 carried by a wall 39 rising from the slide 22 at its head portion.

In the rest or backward position the slide 22 is restrained to the support frame 10.

To this end, as shown in Figure 4, a support 40 projects from the lower surface of the slide 22, wherefrom a tongue 41 extends, preferably shaped like a T, suitable for fitting in a releasable manner in an openable hook 42 fixed to a relative support 43, in turn anchored to the frame 10.

As shown in detail in Figure 5, the opening of the hook 42 is driven by a double-acting hydraulic cylinder 44 via a first type lever 45.

During the dynamic analysis, it may occur that a post, due to inadequacy of the soil or of the anchorage system, does not oppose a significant resistance, and therefore is not able to slow down the slide 22 adequately. In this case the slide 22 has to be appropriately braked so as to avoid damage to the equipment.

To this end, as shown in detail in Figures 4 and 6, a sacrificial tube 46, preferably in steel, is provided advantageously, which projects at the rear from the frontal crosspiece 31a of lower connection of the guides 21 and is suitable for abutting, in a position of maximum advancement of the slide 22, against the support 40 projecting below from it, deforming plastically like a concertina, absorbing energy, with a substantially uniform reaction.

Referring to Figures 7 to 9, the functioning of the machine 100 is now explained, in the case of a post planted in the soil. Naturally a totally similar argument applies in the case wherein the post, instead of being planted in the soil, is restrained to the edge of a structure, such as for example a bridge, a support wall or the like.

First of all a post is planted in the soil, using the pile driver device 11 provided, preferably, on board the machine 100.

To perform the quasi-static analysis the process is the following as illustrated in Figure 7.

The slide 22 is released from the support frame 10 following opening of the hook 42 and consequent disengaging, from it, of the T-shaped block 41. The hydraulic cylinder 25 is then supplied by means of the hydraulic pump mounted on board the machine 100.

The slide 22, released in this way from the frame, is pushed slowly forwards by the advancing of the stem 25a of the hydraulic cylinder 25, whereto it is restrained by coupling between hook 37 and fitting means 38, until the roll striker 36 abuts against the post.

At this point the slide 22 exerts on the post a gradual thrust and the post reacts with a resisting force and starts to bend. During the deflexion of the post, the rollers of the roll striker 36 slide on the post, facilitating the deflexion thereof.

The load cell 24, carried by the slide 22, detects the values of the components parallel and perpendicular to the guides 21 of the resisting force opposed by the post and uses these values to perform the analysis of the resistance of the soil to a quasi-static deflexion of the post planted therein.

At the end of the quasi-static analysis the stem 25a of the hydraulic cylinder 25 withdraws, returning the slide 22 into the rest or backward position. At this point the slide is blocked on the frame 10 by engaging between hook 42 and tongue 41.

During the quasi-static analysis there is not pressure in the pneumatic cylinders 26 and the relative stems 26a are withdrawn.

To perform the dynamic analysis the process is the following as illustrated in Figure 8.

In this case too a post is planted in the soil using the pile driver device 11 provided, preferably, on board the machine 100.

During the dynamic analysis the stem 25a of the hydraulic cylinder 25 is withdrawn and unhooked from the slide 22.

The pneumatic cylinders are then supplied by means of the pneumatic compressor mounted on board the machine 100. The slide 22 is then released from the support frame 10 following opening of the hook 42 and consequent disengaging, from it, of the tongue 41. The slide 22 is in this way pushed rapidly forwards by the advancing of the stems 26a of the pneumatic cylinders 26, until the roll striker 36 abuts sharply against the post.

Typically, during the dynamic analysis, the slide 22, having weight equal to approximately 365 kg, is accelerated, in the first 800 mm of the travel of the stems 26a, up to a speed of 12 m/s. The roll striker 36, mounted at the head of the slide 22, impacts sharply against the post, transferring to it all or part of its kinetic energy.

As described previously, in the case wherein the post, due to inadequacy of the soil or of the anchorage system, does not oppose a significant resistance, and therefore is not able to slow down the slide 22 adequately, the sacrificial tube 46 intervenes.

More particularly, the sacrificial tube 46, in the condition of maximum advancement of the slide 22 under the action of the pneumatic cylinders 26, abuts against the support 40 (Figure 6), deforming plastically like a concertina, and absorbing energy, with a substantially uniform reaction.

Following the impact of the slide 22 against the post, the load cell 24 detects the values of the components parallel and perpendicular to the guides 21 of the resisting force opposed by the post and uses these values to perform the analysis of the resistance of the soil to a dynamic deflexion of the post planted therein.

At the end of the dynamic analysis the hydraulic cylinder 25 is operated, whose stem 25a advances until the hook 37 carried by it couples with the fitting means 38 provided at the head of the slide 22. Once coupling has taken place, the stem 25a of the hydraulic cylinder 25 withdraws, returning the slide 22 into the rest position. At this point the slide is blocked on the frame 10 by engaging between hook 42 and tongue 41.

Both during the phase of performance of the quasi-static analysis and the phase of performance of the dynamic analysis, the guides 21 can be appropriately tilted downwards through the action of the cylinders 33. This allows, advantageously, action, slowly (quasi-static analysis) or rapidly (dynamic analysis), on the post in a lower position and in a direction closer to the perpendicular to the axis of the post, when the post has undergone significant deflexion.

## Claims

1. A machine (100) for analysing, in situ, the resistance of the soil, or of a restraining structure, to the deflexion of a post of a motorway guardrail, **characterised in that** it comprises a support frame (10) and an analysis device (20) mounted on said support frame (10), said analysis device (20) comprising:
- a pair of guides (21);
- a slide (22) provided with means (24) for detecting the resisting force opposed by the post and sliding along the guides (21) between a rest or backward position and a work or advanced position;
- first means (25) for driving the slide (22), suitable for slowly driving the slide (22) between the backward position and the advanced position, thereby performing a quasi-static resistance analysis;
**characterized in that it further provides**
- second means (26) for driving the slide (22), suitable for rapidly driving the slide (22) from the backward position to the advanced position **so that the slide (22) impacts sharply against said post,** thereby performing a dynamic resistance analysis.

2. A machine (100) according to claim 1, **characterised in that** it further comprises a pile driver device (11) carried by said support frame (10).

3. A machine (100) according to claim 1 or 2, **characterised in that** said means (24) for detecting the resisting force opposed by the post consist of a load cell (24) fixed at the head of the slide (22) and suitable for detecting the components of the force parallel and perpendicular to said guides (21).

4. A machine (100) according to claim 3, **characterised in that** a roll striker (36) is applied to said load cell (24).

5. A machine (100) according to any one of the previous claims, **characterised in that** said first means (25) for driving the slide (22) comprise a hydraulic cylinder (25) provided with a stem (25a) and said second means (26) for driving the slide (22) comprise a pair of pneumatic cylinders (26), each one provided with a respective stem (26a), said pneumatic cylinders (26) being placed at opposite sides of said hydraulic cylinder (25).

6. A machine (100) according to claim 5, **characterised in that** said hydraulic cylinder (25) and said pair of pneumatic cylinders (26) are positioned on the top of the slide (22), parallel thereto, and blocked in position at a plate-shaped member (27) suitable for connecting said guides (21) above.

7. A machine (100) according to claim 5 or 6, **characterised in that** said hydraulic cylinder (25) can be releasably coupled to said slide (22) by coupling of a hook (37) provided at the head of the respective stem (25a) with fitting means (38) provided at the head of the slide (22).

8. A machine (100) according to any one of the previous claims, **characterised in that** a support (40) projects from a lower surface of said slide (22), a tongue (41) extending from said support (40), suitable for engaging in a releasable manner an openable hook (42) anchored to the frame (10), the opening of said hook (42) being driven by a double-acting hydraulic cylinder (44) via a first type lever (45).

9. A machine (100) according to any one of the previous claims, **characterised in that** said guides (21) are connected below by a frontal crosspiece (31a), a central crosspiece (31b) and a rear crosspiece (31c), pins (32) projecting laterally from said rear crosspiece (31c), suitable for rotatably restraining said analysis device (20) to the support frame (10), the rotation being driven by a pair of hydraulic cylinders (33), each one having an end hinged to the frame (10) and the other end hinged to a respective guide (21) of said pair of guides (21).

10. A machine (100) according to claim 9, when dependent on claim 8, **characterised in that** it further comprises a sacrificial tube (46) projecting at the rear from said frontal crosspiece (31a) and suitable for abutting against the support (40), in the position of maximum advancement of the slide (22), deforming plastically and braking the slide (22).

## Patentansprüche

1. Maschine (100) zum Analysieren des Widerstandes des Bodens oder einer Rückhaltestruktur vor Ort gegenüber der Ablenkung eines Pfostens einer Autobahnleitplanke, **dadurch gekennzeichnet, dass** sie einen Tragrahmen (10) und eine Analysevorrichtung (20) umfasst, die an dem Tragrahmen (10) angebracht sind, wobei die Analysevorrichtung (20) Folgendes aufweist:
- ein Paar Führungen (21);
- einen Schieber (22), der mit Mitteln (24) zum Detektieren der Widerstandskraft, die der Pfosten entgegensetzt, versehen ist, die entlang der Führungen (21) zwischen einer Ruhe- bzw. hinteren Position und einer Arbeits- bzw. vorgeschobenen Position gleiten;
- erste Mittel (25) zum Antreiben des Schiebers (22), die geeignet sind, um den Schieber (22) langsam zwischen der hinteren Position und der vorgeschobenen Position anzutreiben, wodurch eine quasistatische Widerstandsanalyse durchgeführt wird;
**dadurch gekennzeichnet, dass** sie ferner bereitstellt:
- zweite Mittel (26) zum Antreiben des Schiebers (22), die geeignet sind, um den Schieber (22) schnell von der hinteren Position zu der vorgeschobenen Position anzutreiben, sodass der Schieber (22) heftig auf dem Pfosten auftrifft, wodurch eine dynamische Widerstandsanalyse durchgeführt wird.

2. Maschine (100) nach Anspruch 1, **dadurch gekennzeichnet, dass** sie ferner eine Rammenvorrichtung (11) umfasst, die von dem Tragrahmen (10) getragen wird.

3. Maschine (100) nach Anspruch 1 oder 2, **dadurch gekennzeichnet, dass** die Mittel (24) zum Detektieren der Widerstandskraft, die der Pfosten entgegensetzt, aus einer Lastzelle (24) bestehen, die am Kopf des Schiebers (22) befestigt ist und zum Detektieren der Komponenten der Kraft parallel und senkrecht zu den Führungen (21).

4. Maschine (100) nach Anspruch 3, **dadurch gekennzeichnet, dass** ein Walzenstößel (36) an der Lastzelle (24) angebracht ist.

5. Maschine (100) nach einem der vorhergehenden Ansprüche, **dadurch gekennzeichnet, dass** die ersten Mittel (25) zum Antreiben des Schiebers (22) einen mit einem Schaft (25a) versehenen Hydraulikzylinder (25) umfassen und die zweiten Mittel (26) zum Antreiben des Schiebers (22) ein Paar von Hydraulikzylindern (26) umfassen, die jeweils mit einem entsprechenden Schaft (26a) versehen sind, wobei die Hydraulikzylinder (26) an gegenüberliegenden Seiten des Hydraulikzylinders (25) angeordnet sind.

6. Maschine (100) nach Anspruch 5, **dadurch gekennzeichnet, dass** der Hydraulikzylinder (25) und das Paar von Hydraulikzylindern (26) auf der Oberseite des Schiebers (22) parallel dazu angeordnet und an einem plattenförmigen Element (27), das zum Verbinden der Führungen (21) vorstehend geeignet ist, in Position blockiert sind.

7. Maschine (100) nach Anspruch 5 oder 6, **dadurch gekennzeichnet, dass** der Hydraulikzylinder (25) durch Kopplung eines am Kopf des jeweiligen Schaftes (25a) vorgesehenen Hakens (37) mit am Kopf des Schiebers (22) vorgesehenen Anpassungsmitteln (38) lösbar mit dem Schieber (22) verbunden werden kann.

8. Maschine (100) nach einem der vorhergehenden Ansprüche, **dadurch gekennzeichnet, dass** ein Träger (40) von einer unteren Fläche des Schiebers (22) hervorsteht, wobei sich eine Zunge (41) von dem Träger (40) erstreckt und geeignet ist, um einen an dem Rahmen (10) verankerten zu öffnenden Haken (42) lösbar zu befestigen, wobei das Öffnen des Hakens (42) von einem doppelt wirkenden Hydraulikzylinder (44) über einen Hebel eines ersten Typs (45) angetrieben wird.

9. Maschine (100) nach einem der vorhergehenden Ansprüche, **dadurch gekennzeichnet, dass** die Führungen (21) unten durch einen vorderen Querträger (31a), einen zentralen Querträger (31b) und einen hinteren Querträger (31c), verbunden sind, wobei Stifte (32) seitlich von dem hinteren Querträger (31c) hervorstehen und zum drehbaren Halten der Analysevorrichtung (20) an dem Tragrahmen (10) geeignet sind, wobei die Drehung durch ein Paar von Hydraulikzylindern (33) angetrieben wird, die jeweils ein Ende aufweisen, das über ein Gelenk mit dem Rahmen (10) verbunden ist, und das andere Ende mit einem Gelenk an einer entsprechenden Führung (21) des Paares von Führungen (21) befestigt ist.

10. Maschine (100) nach Anspruch 9, wenn abhängig von Anspruch 8, **dadurch gekennzeichnet, dass** sie ferner ein Opferrohr (46) umfasst, das auf der Rückseite von dem vorderen Querstück (31a) hervorsteht und in der Position des maximalen Vorschubs des Schiebers (22) zum Angrenzen an den Träger (40) geeignet ist, wodurch der Schieber (22) plastisch verformt und abgebremst wird.

## Revendications

1. Machine (100) pour l'analyse, in situ, de la résistance du sol, ou d'une structure de restriction, à la déflection d'un montant d'une barrière de sécurité d'autoroute, **caractérisée en ce qu'**elle comprend un cadre de support (10) et un dispositif d'analyse (20) monté sur ledit cadre de support (10), ledit dispositif d'analyse (20) comprenant :
- une paire de guides (21) ;
- une glissière (22) munie d'un moyen (24) de détection de la force de résistance opposée par le montant et glissant le long des guides (21) entre une position de repos ou une position reculée et une position de travail ou une position avancée ;
- un premier moyen (25) pour entraîner la glissière (22), conçu pour entraîner lentement la glissière (22) entre la position reculée et la position avancée, effectuant ainsi une analyse de résistance quasi-statique ;
**caractérisée en ce qu'**elle fournit en outre
- un second moyen (26) pour entraîner la glissière (22), conçu pour entraîner rapidement la glissière (22) à partir de la position reculée vers la position avancée de sorte que la glissière (22) subit un choc violent contre ledit montant, effectuant ainsi une analyse de résistance dynamique.

2. Machine (100) selon revendication 1, **caractérisée en ce qu'**elle comprend en outre un dispositif de sonnette (11) supporté par ledit cadre de support (10).

3. Machine (100) selon la revendication 1 ou 2, **caractérisée en ce que** ledit moyen (24) de détection de la force de résistance opposée par le montant consiste en une cellule de chargement (24) fixée au niveau de la tête de la glissière (22) et conçu pour détecter les composants de la force parallèle et perpendiculaire auxdits guides (21).

4. Machine (100) selon la revendication 3, **caractérisée en ce qu'**un percuteur de rouleau (36) est appliqué à ladite cellule de chargement (24).

5. Machine (100) selon l'une quelconque des revendications précédentes, **caractérisée en ce que** ledit premier moyen (25) d'entraînement de la glissière (22) comprend un cylindre hydraulique (25) muni d'une tige (25a) et ledit second moyen (26) d'entraînement de la glissière (22) comprend une paire de cylindres pneumatiques (26), chacun muni d'une tige respective (26a), lesdits cylindres pneumatiques (26) étant placés à des côtés opposés dudit cylindre hydraulique (25).

6. Machine (100) selon la revendication 5, **caractérisée en ce que** ledit cylindre hydraulique (25) et ladite paire de cylindres pneumatiques (26) sont positionnés sur le dessus de la glissière (22), parallèles à celle-ci, et bloqués en position au niveau d'un élément en forme de plaque (27) conçu pour raccorder lesdits guides (21) au-dessus.

7. Machine (100) selon la revendication 5 ou 6, **caractérisée en ce que** ledit cylindre hydraulique (25) peut être couplé de manière libérable à ladite glissière (22) par couplage d'un crochet (37) fournit au niveau de la tête de la tige respective (25a) équipée d'un moyen de fixation (38) fourni au niveau de la tête de la glissière (22).

8. Machine (100) selon l'une quelconque des revendications précédentes, **caractérisée en ce qu'**un support (40) projette à partir d'une surface inférieure de ladite glissière (22), une langue (41) s'étendant à partir dudit support (40), conçue pour mettre en prise d'une manière détachable un crochet ouvrable (42) ancré au cadre (10), l'ouverture dudit crochet (42) étant entraînée par un cylindre hydraulique à double action (44) par l'intermédiaire d'un levier de premier type (45).

9. Machine (100) selon l'une quelconque des revendications précédentes, **caractérisée en ce que** lesdits guides (21) sont raccordés en dessous à l'aide d'une traverse frontale (31a), d'une traverse centrale (31b) et d'une traverse arrière (31c), des broches (32) projetant de manière latérale depuis ladite traverse arrière (31c), conçues pour retenir de manière rotative ledit dispositif d'analyse (20) au cadre de support (10), la rotation étant entraînée par une paire de cylindres hydrauliques (33), chacun possédant une extrémité articulée au cadre (10) et l'autre extrémité articulée à un guide respectif (21) de ladite paire de guides (21).

10. Machine (100) selon la revendication 9, lorsque dépendante de la revendication 8, **caractérisée en ce qu'**elle comprend en outre un tube jetable (46) projetant à l'arrière de ladite traverse frontale (31a) conçue pour venir buter contre le support (40), dans la position d'avancement maximum de la glissière (22), déformant la glissière (22) de manière plastique et cassant la glissière (22).
